# NEUE EUROPÄISCHE PATENTSCHRIFT

(11) **EP 2 028 142 B2**
(45) Veröffentlichungstag und Bekanntmachung des Hinweises auf die Entscheidung über den Einspruch: **08.07.2020**
(45) Hinweis auf die Patenterteilung: 10.10.2012
(21) Anmeldenummer: 08014852.1
(22) Anmeldetag: 21.08.2008
(51) Int. Cl.: B65G 59/06

(54) **Magazin für Speicherstäbe für die Aufnahme wurstförmiger Produkte und Verfahren zum Zuführen der Speicherstäbe**
Cartridge for storage rods for storing sausage-form products and method for supplying storage rods
Cartouche pour tiges de stockage en vue de la réception de produits en forme de saucisse et procédé de guidage des tiges de stockage

(30) Priorität: 23.08.2007 DE 102007039883
(43) Veröffentlichungstag der Anmeldung: 25.02.2009
(73) Patentinhaber: Poly-clip System GmbH & Co. KG, 65795 Hattersheim (DE)
(72) Erfinder: Töpfer, Klaus, 64572 Büttelborn (DE)
(74) Vertreter: Eisenführ Speiser

(56) Entgegenhaltungen:
- DE-A1- 19 621 834
- DE-A1-102006 041 829
- GB-A- 1 524 463
- JP-A- 61 090 919
- US-A- 4 119 243
- US-A- 4 673 103

## Beschreibung

Die Erfindung betrifft ein Magazin für Speicherstäbe für die Aufnahme wurstförmiger Produkte nach dem Oberbegriff des Patentanspruches 1 und ein Verfahren zum Zuführen der Speicherstäbe für eine Bestückung mit wurstförmigen Produkten nach dem Oberbegriff des Patentanspruches 15.

Die Speicherstäbe sind ausgebildet zur Aufnahme wurstförmiger Produkte, wobei die wurstförmigen Produkte Aufhängevorrichtungen, insbesondere Aufhängeschlaufen aufweisen, die in die Speicherstäbe eingefädelt werden können. Somit können an den Speicherstäben, beispielsweise für eine Räucherung die wurstförmigen Produkte nebeneinander an den Speicherstäben aufgehängt werden. Die wurstförmigen Produkte werden in der Praxis aus einem Herstellungsautomaten in rascher Folge geliefert und an den Speicherstäben aufgehängt. Um eine reibungslose Abfolge der Bestückung aufeinanderfolgender Speicherstäbe mit den Wurstprodukten zu gewährleisten, ist es erforderlich, dass die Speicherstäbe ebenfalls in rascher Folge zur Bestückungseinrichtung gefördert werden.

Ein gattungsgemäßes Magazin für Artikeln ist aus US 4,673,103 bekannt.

Aufgabe der Erfindung ist es, demzufolge ein Magazin und Verfahren der eingangs genannten Art zu schaffen, mit denen eine rasche und geordnete Zuführung der Speicherstäbe für die Bestückung erreicht wird.

Diese Aufgabe wird erfindungsgemäß beim Magazin durch die Merkmale des Patentanspruches 1 und beim Verfahren durch die Merkmale des Patentanspruches 15 gelöst.

Die Erfindung sieht demzufolge ein Magazin für Speicherstäbe, welche mit wurstförmigen Produkten zu bestücken sind, vor, das mehrere vertikal sich erstreckende Schächte aufweist. In den mehreren Schächten werden Speicherstäbe übereinanderliegend angeordnet. Hierdurch wird eine vorsortierte Bereitstellung der mehreren Speicherstäbe erreicht. Am unteren Ende eines jeweiligen Schachtes ist eine Vereinzelungseinrichtung vorgesehen, welche den jeweils untersten Speicherstab freigibt, so dass dieser in die Bestückungseinrichtung gelangen kann oder gefördert werden kann. Die Breite der jeweiligen Schächte ist an die Stabbreite angepasst, so dass ein ungehindertes Nachrücken der Speicherstäbe, die über den jeweils freigegebenen Speicherstab nach unten aufgrund von Schwerkraft liegen, erreicht wird.

Für ein geordnetes Freigeben der aufeinanderfolgenden Speicherstäbe aus den jeweiligen Schächten besitzt jede Vereinzelungseinrichtung zumindest an einer der beiden Schachtstirnseiten, vorzugsweise an beiden Schachtstirnseiten, zwei übereinander liegende und für aufeinanderfolgende Betriebsstellungen in das Schachtinnere verschiebbare Halteeinrichtungen. Dabei ragen in einer ersten Betriebsstellung die beiden Halteeinrichtungen, d.h. die obere Halteeinrichtung und die untere Halteeinrichtung in das Schachtinnere. Der unterste Speicherstab liegt dabei auf der oberen Halteeinrichtung auf. In einer zweiten Betriebsstellung wird die obere Halteeinrichtung aus dem Schachtinneren entfernt und der unterste Speicherstab bewegt sich insbesondere aufgrund seiner Schwerkraft nach unten und liegt auf der unteren Halteeinrichtung auf. In einer dritten Betriebsstellung sind sowohl die obere Halteeinrichtung als auch die untere Halteeinrichtung in das Schachtinnere bewegt. Der unterste Speicherstab liegt dann zwischen den beiden in das Schachtinnere ragenden Halteeinrichtungen und liegt auf der unteren Halteeinrichtung auf. Die obere Halteeinrichtung ragt in einen Zwischenraum oder in Zwischenräume zwischen dem untersten Speicherstab und dem darüberliegenden Speicherstab. In einer vierten Betriebsstellung wird die untere Halteeinrichtung zur Freigabe des untersten Speicherstabes aus dem Schachtinneren entfernt. Der freigegebene Speicherstab bewegt sich dann bevorzugt geführt durch eine Fördereinrichtung in die Bestückungseinrichtung, in welcher die Wurstwaren auf dem Speicherstab nacheinander aufgehängt werden.

Die Speicherstäbe können direkt nach der Freigabe aus dem jeweiligen Magazinschacht in die Bestückungseinrichtung eingebracht werden. Vorzugsweise ist jedoch unter den Schachtöffnungen, durch welche die freigegebenen Speicherstäbe sich nach unten bewegen, eine Fördereinrichtung vorgesehen, auf welcher die freigegebenen Speicherstäbe in Förderrichtung in Aufeinanderfolge angeordnet werden. Die Fördereinrichtung kann hierzu Aufnahmestellen, z.B. Aufnahmefächer aufweisen, in die jeweils ein Speicherstab bei der Freigabe übergeführt wird. Es ist jedoch auch möglich, in der Förderrichtung aneinanderliegende Speicherstäbe mittels einer Schubeinrichtung in Richtung zur Bestückungseinrichtung weiterzubewegen.

Vorzugsweise kommen Speicherstäbe zur Anwendung, welche eine gleichförmige Querschnittsform aufweisen. Beispielsweise können die Speicherstäbe eine quadratische Querschnittsform vorzugsweise mit abgerundeten Ecken aufweisen. Ferner kann die Querschnittsform der Speicherstäbe sternförmig, insbesondere Y-förmig mit gleich langen Profilschenkeln und gleichen Winkelabständen zwischen den Profilschenkeln aufweisen. Auch eignen sich Speicherstäbe mit kreisrundem Querschnitt. Derart gleichförmig ausgebildete Speicherstäbe können als Schüttgut, beispielsweise über eine schräg geneigte Schüttgutfläche den Magazinschächten oben zugeführt werden, wobei aufgrund der gleichförmigen Querschnitte sich die Speicherstäbe in den Schächten selbsttätig anordnen, so dass sie behinderungsfrei während der Freigabe der jeweils untersten Speicherstäbe aufgrund von Schwerkraft nachrücken können.

Ferner wird durch die Erfindung insbesondere mit Hilfe des oben erläuterten Magazins und der oben erläuterten Fördereinrichtung ein Verfahren zum Zuführen von Speicherstäben zur Bestückung mit wurstförmigen Produkten geschaffen, bei dem die Speicherstäbe aus einer Bereitstellungsposition, in welcher die Speicherstäbe in mehreren in Förderrichtung nebeneinander liegenden, vertikalen Stabanordnungen einzeln übereinander angeordnet werden, für die Bestückung mit den wurstförmigen Produkten weitertransportiert werden. Wie oben erläutert, sind die vertikalen Stabanordnungen in den nebeneinander liegenden Schächten vorgesehen. Aus den Stabanordnungen werden die jeweils untersten Speicherstäbe einzeln und im wesentlichen gleichzeitig freigegeben und die freigegebenen nebeneinander angeordneten Speicherstäbe gleichzeitig, d. h. chargenweise mittels der Fördereinrichtung zur Bestückungseinrichtung weitertransportiert. Zur synchronisierten Freigabe der jeweils untersten Speicherstäbe kann die Ausgangsposition der leeren Fördereinrichtung bei ihrer unter den vertikalen Stabanordnungen bzw. Schächten befindlichen Position erfasst werden, woraufhin dann die untersten Speicherstäbe in die Fördereinrichtung freigegeben werden. Die Ausgangsposition kann hierbei mit Hilfe einer Fühlereinrichtung, insbesondere berührungslos beispielsweise optisch, kapazitiv, induktiv oder dergleichen abgetastet werden. Beim Transport der freigegebenen Speicherstäbe in Richtung zur Bestückungseinrichtung hin können diese im Abstand voneinander oder aneinander liegend bewegt werden. Dabei wird das Verlassen der jeweils transportierten Charge der Speicherstäbe aus dem Bereich unterhalb der in den Schächten verbliebenen vertikalen Stabanordnungen erfasst. Die nachfolgende Erfassung der Fördereinrichtung in der Ausgangsposition ist ein Zeichen dafür, dass diese mit ihren Aufnahmestellen ausgerichtet zu den Schächten für die Aufnahme von erneut freizugebenden Speicherstäben in Bereitstellung liegt.

Anhand der Figuren wird an Ausführungsbeispielen die Erfindung noch näher erläutert.

Es zeigt
- Fig. 1: ein erstes Ausführungsbeispiel der Erfindung;
- Fig. 2: verschiedene Betriebsstellungen des in Fig. 1 dargestellten Ausführungsbeispiels;
- Fig. 3: verschiedene Betriebsstellungen eines weiteren Ausführungsbeispiels der Erfindung; und
- Fig. 4: eine perspektivische Ansicht eines beim Ausführungsbeispiel der Figur 1 zum Einsatz kommenden Magazins.

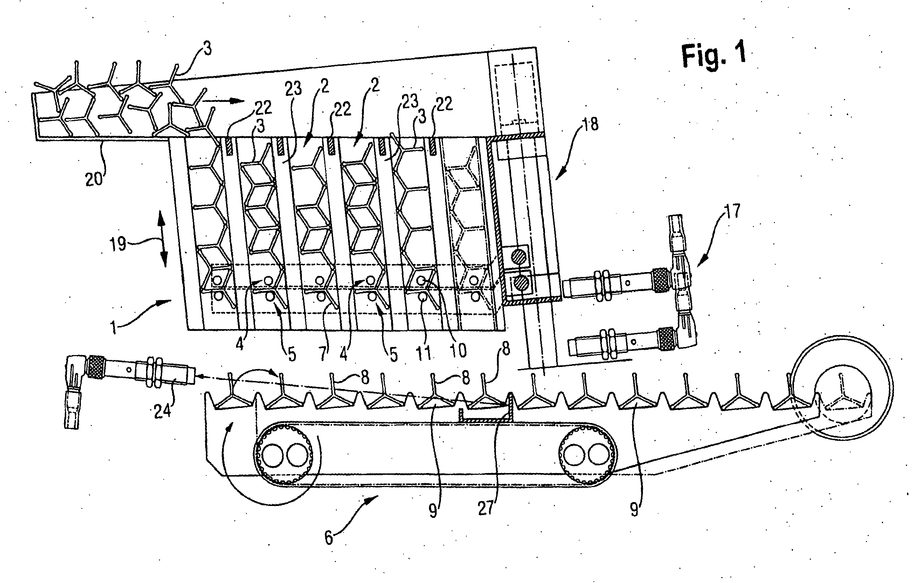

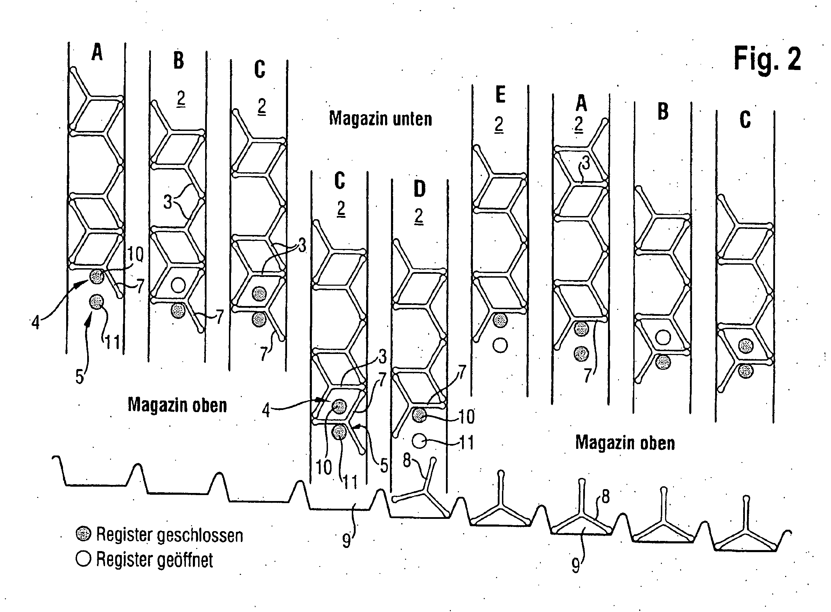

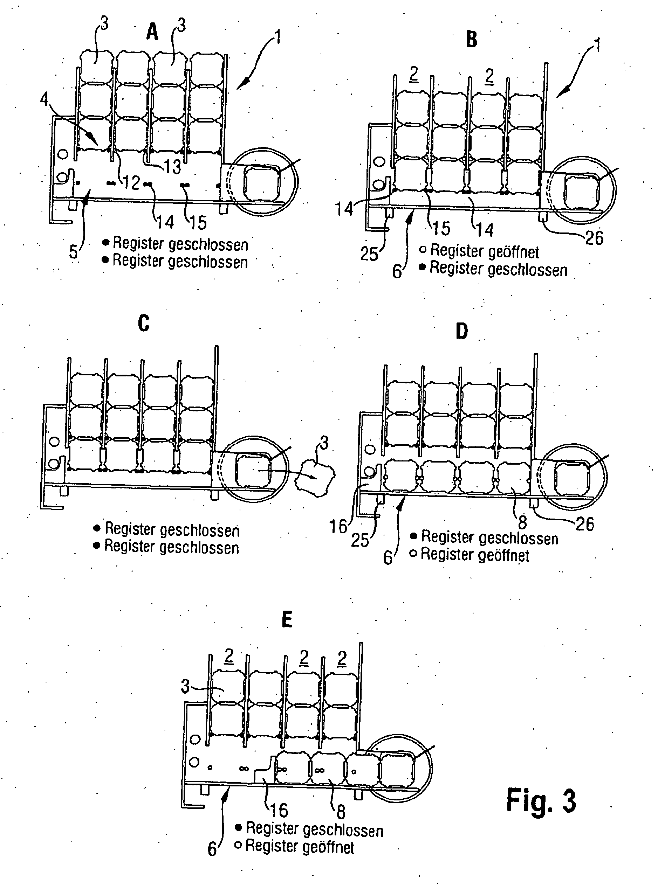

Die in den Fig. 1 bis 4 dargestellten Ausführungsbeispiele zeigen Magazine 1, welche vertikal sich erstreckende Schächte 2 aufweisen. In den Schächten sind übereinanderliegend Speicherstäbe 3, beispielsweise zum Räuchern von Wurstwaren geeignete Rauchstäbe angeordnet. Beim Ausführungsbeispiel der Fig. 1 und 2 besitzen die Speicherstäbe 3 einen regelmäßigen sternförmigen Querschnitt mit drei gleich langen Profilschenkeln, die gleiche Winkelabstände voneinander aufweisen. Bei dem in Fig. 3 dargestellten Ausführungsbeispiel besitzen die Speicherstäbe 3 einen im wesentlichen quadratischen Querschnitt mit abgerundeten Ecken.

Aufgrund dieser regelmäßig ausgebildeten Querschnittsformen ordnen sich die Speicherstäbe 3 im wesentlichen selbsttätig in mehreren möglichen Winkelpositionen um ihre Längsachse in den vertikalen Schächten 2 an. Die Breite der Schächte 2 ist auf die Breite der jeweiligen Speicherstäbe angepasst, so dass diese ungehindert bei der jeweiligen Freigabe der untersten Speicherstäbe nachrücken können.

Ferner können die Speicherstäbe 3 als Schüttgut, beispielsweise entlang einer schräg geneigten Schüttgutfläche 20 an den Oberseiten den Schächten 2 zugeführt werden, wobei wie schon erwähnt die selbsttätige Positionierung der Speicherstäbe in den Schächten 2 aufgrund ihrer regelmäßigen Umrissformen sich ergibt.

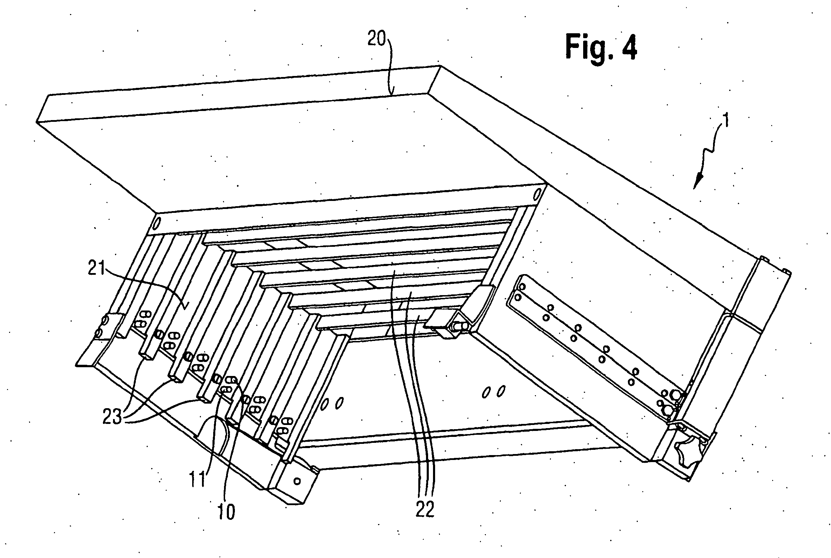

Die Schächte erstrecken sich senkrecht zur jeweiligen Zeichenebene in den Figuren 1 bis 3 und besitzen parallel zur Zeichenebene verlaufende, die Schächte in ihrer Längsausdehnung abschließende Stirnseiten 21 (Fig. 4).

An den jeweiligen unteren Enden der Schächte 2 sind Vereinzelungseinrichtungen vorgesehen, welche die aufeinanderfolgende jeweils einzelne Freigabe des untersten Speicherstabes 7 bewirken.

Bei den Ausführungsbeispielen beinhaltet die jeweilige Vereinzelungseinrichtung zwei übereinanderliegende Halteeinrichtungen 4 und 5. Beim Ausführungsbeispiel der Fig. 1 beinhaltet die oben liegende Halteeinrichtung 4 ein im wesentlichen mittig in der Stirnseite des jeweiligen Schachtes 2 angeordnetes Halteelement 10, beispielsweise in Form eines Bolzens. Auch die untere Halteeinrichtung 5 beinhaltet ein darunterliegendes Halteelement 11 ebenfalls vorzugsweise in Form eines Bolzens. Die Halteelemente 10 und 11 können zwei verschiedene Positionen einnehmen, die für das Ausführungsbeispiel der Fig. 1 in der Fig. 2 dargestellt sind. Bei der in der Fig. 2 mit "Register geschlossen" bezeichneten Position ragt das Halteelement 10 bzw. 11 in das Schachtinnere. Bei der in Fig. 2 mit "Register geöffnet" bezeichneten Position ist das Halteelement 10 bzw. 11 aus dem Schachtinneren entfernt. Die beiden Positionen können durch Verschiebung des jeweiligen Halteelementes 10 bzw. 11 in deren Längsrichtung erreicht werden. Die Verschiebung kann mit Hilfe einer Steuereinrichtung 17, welche die Halteelemente beispielsweise pneumatisch gesteuert beaufschlagt, erfolgen.

Die in den Fig. 1 und 2 dargestellte Ausführungsform für die obere Halteeinrichtung 4 und die untere Halteeinrichtung 5 eignet sich bevorzugt für die in diesen Figuren dargestellten Speicherstäbe 3 mit regelmäßigem sternförmigen Querschnitt. Diese Speicherstäbe haben drei Querschnittsschenkel, welche in Winkelabständen von jeweils 120° voneinander beabstandet sind und welche gleiche Länge aufweisen. Durch die mittige Anordnung der Halteelemente 10 und 11 in der jeweiligen Schachtstirnfläche wird der jeweils unterste Speicherstab 7 an einem Profilschenkel abgestützt, während die Enden der beiden anderen Profil-schenkel an einer Seitenwand des Schachtes 2 gleitend abgestützt sind. Das Ende des vom in das Schachtinnere ragenden Halteelement 10 bzw. 11 abgestützten Schenkels liegt an der anderen Seitenwand des Schachtes 2 gleitend an.

Beim Ausführungsbeispiel der Fig. 3 sind für die beide Halteeinrichtungen 4 und 5 jeweils zwei Halteelemente vorgesehen. Die obere Halteeinrichtung 4 beinhaltet beim Ausführungsbeispiel der Fig. 3 Halteelemente 12, 13 und die untere Halteeinrichtung 5 beinhaltet Halteelemente 14, 15. Die Halteelemente sind vorzugsweise in der Nähe der beiden Seitenwände der Schächte 2 angeordnet. Auch diese Halteelemente können in zwei verschiedene Positionen gebracht werden. In der Position "Register geöffnet" sind die Halteelemente 12, 13 bzw. 14, 15 aus dem Schachtinnenraum entfernt und bei der Position "Register geschlossen" ragen sie in den Innenraum des jeweiligen Schachtes 2, wie beim Ausführungsbeispiel der Fig. 1 und 2. Vorzugsweise sind an beiden Stirnflächen der Schächte 2 die Halteeinrichtungen 4, 5 vorgesehen.

Die Halteeinrichtungen 4 und 5 der Ausführungsbeispiele können verschiedene Betriebsstellungen einnehmen. In einer ersten Betriebsstellung ragen die Halteelemente 10, 11 bzw. 12 bis 15 in das jeweilige Schachtinnere. Der unterste Speicherstab 7 liegt auf dem Halteelement 10 bzw. den Halteelementen 12, 13 der oberen Halteeinrichtung 4 auf. In den Fig. 2 und 3 ist diese Betriebsposition in der Darstellung A gezeigt.

In einer zweiten Betriebsstellung (Darstellung B in Fig. 2 und Fig. 3) ist das Halteelement 10 bzw. sind die Halteelemente 12, 13 der oben liegenden Halteeinrichtung 4 aus dem Schachtinneren entfernt. Der unterste Speicherstab 7 liegt auf dem Halteelement 11 bzw. den Halteelementen 14, 15 der unteren Halteeinrichtung 5 auf.

In der dritten Betriebsstellung (Darstellung C in den Fig. 2 und 3) sind die Halteelemente 10, 11 bzw. 12 bis 15 der beiden Halteeinrichtungen 4, 5 in ihre geschlossenen Stellungen gebracht und ragen in das jeweilige Schachtinnere. Der unterste Speicherstab 7 liegt auf dem Halteelement 11 bzw. den Halteelementen 14, 15 der unteren Halteeinrichtung 5 auf. Das Halteelement 10 bzw. die Halte-elemente 12, 13 der oben liegenden Halteeinrichtung 4 ragen in Zwischenräume zwischen dem unteren Speicherstab und dem darüberliegenden Speicherstab. Beim Ausführungsbeispiel der Fig. 1 und 2 wird dieser Zwischenraum zwischen den Profilschenkeln des sternförmigen Stabprofils und beim Ausführungsbeispiel der Fig. 3 durch die abgerundeten Profilecken des im wesentlichen quadratischen Stabprofils gebildet.

In einer vierten Betriebsstellung (Darstellung D in den Fig. 2 und 3) wird das Halteelement 11 bzw. werden die Halteelemente 14, 15 der unteren Halteeinrichtung 5 aus dem Schachtinneren entfernt (Register geöffnet). Dadurch wird der unterste Speicherstab 7 freigegeben und fällt als freigegebener Speicherstab 8 in eine Aufnahmestelle 9 einer Fördereinrichtung 6. Der in der Reihenfolge nachfolgende Speicherstab (unterster Speicherstab 7) wird von dem weiterhin in das Schachtinnere ragende Halteelemente 10 bzw. von den weiterhin in das Schachtinnere ragenden Halteelementen 12, 13 der oberen Halteeinrichtung 4 gegen einen Austritt nach unten angehalten.

In einer weiteren Betriebsstellung E werden die mit der Fördereinrichtung 6 angeordneten freigegebenen Speicherstäbe 8 in Richtung zur nicht näher dargestellten Bestückungseinrichtung weitertransportiert. Anschließend werden die Halteeinrichtungen 4 und 5 wieder in die erste Betriebsstellung (Darstellungen A in Fig. 2 und 3) gebracht.

Wie aus den Fig. 1 und 2 zu ersehen ist, werden die jeweiligen Schächte 2 mit Hilfe einer in Fig. 1 schematisch dargestellten Hubeinrichtung 18 aus einer Normalposition (Magazin oben in Fig. 2) in eine untere Position (Magazin unten) gebracht. Die jeweiligen Schächte 2 werden zumindest in der vierten Betriebsstellung (Darstellung D), bei welcher der jeweilige unterste Speicherstab freigegeben wird, in die untere Position (Magazin unten) gebracht. Wie aus Fig. 2 zu ersehen ist, kann der jeweilige Magazinschacht 2 diese untere Position auch in der vorhergehenden dritten Betriebsstellung (Darstellung C) gebracht werden. Hierdurch wird erreicht, dass eine gezielte Übergabe des freigegebenen Speicherstabes 8 in die Fördereinrichtung 6 und insbesondere in die jeweiligen Aufnahmestellen 9 der Fördereinrichtungen gewährleistet wird. Bei angehobenen Magazinschächten können dann die freigegebenen Speicherstäbe 8 in der Fördereinrichtung 6 ungehindert in Richtung zur Bestückungseinrichtung transportiert werden.

Wie aus den Fig. 1,3 und 4 zu ersehen ist, kann das Magazin 1 mehrere Schächte, die nebeneinander in Förderrichtung angeordnet sind, aufweisen. Wie schon erläutert, wird eine Hubbewegung 19 (Fig. 1) von der Hubeinrichtung 18 bewirkt. Durch die Steuereinrichtung 17 kann sowohl in der angehobenen Position als auch in der abgesenkten Position des Magazins 1 die gesteuerte Bewegung der Halteelemente 10 und 11 bzw. 12 bis 15 durchgeführt werden.

Bei Magazinen mit mehreren Schächten 2, wie sie in den Fig. 1, 3 und 4 dargestellt sind, erfolgt eine gleichzeitige Freigabe der jeweils untersten Speicherstäbe. Bei der in Fig. 1 dargestellten Fördereinrichtung 6 werden die in den Aufnahmestellen 9 angeordneten freigegebenen Speicherstäbe 8 gleichzeitig in Richtung zur Bestückungseinrichtung weitertransportiert. Bei der in Fig. 3 vorgesehenen Fördereinrichtung 6 werden die freigegebenen Speicherstäbe 8 mit Hilfe einer Schubeinrichtung 16 über eine Gleitfläche in Richtung zur Bestückungseinrichtung gleichzeitig gefördert.

Die Fig. 4 zeigt eine Innenansicht des Magazins 1 in einer Ansicht schräg von unten. Hieraus ist ersichtlich dass das Magazin 1 zur seitlichen Begrenzung der Schächte und zur Anordnung der übereinander liegenden Speicherstäbe 3 in den vertikalen Stabanordnungen an den beiden innen liegenden Magazinstirnseiten in das Magazininnere ragende Vorsprünge (Stege) 23 aufweist. Diese erstrecken sich in vertikaler Richtung im Abstand voneinander und definieren so die Breite der jeweiligen Schächte 2. Die Ausbildung der Halteeinrichtungen 4, 5 entspricht dem in Fig. 1 dargestellten Ausführungsbeispiel. Natürlich können die Halteeinrichtungen auch so ausgebildet sein wie es im Ausführungsbeispiel der Fig. 3 gezeigt ist.

An den oberen Schachtenden sind Leisten 22 vorgesehen, welche sich über die gesamte Länge des Magazins bzw. der Schächte 2 erstrecken. Diese Leisten 22 bilden an den oberen Öffnungen der Schächte Schachtbegrenzungen und einen Rost als Fortsetzung der angrenzenden Schüttgutfläche 20. Die Breite der Leisten 22 ist geringer als die Breite der die Schächte begrenzenden Vorsprünge 23. Die Leisten 22 sind etwa in den jeweiligen Mitten der oberen Enden der Vorsprünge 23 befestigt. Beim Nachfüllen der Schächte 2 werden die auf der Schüttgutfläche 20 liegenden Speicherstäbe 3 in den Raum oberhalb des von den Leisten 22 gebildeten Rostes im Magazin 1 gebracht. Durch die sich über die gesamte Länge des Magazins 1 erstreckenden Leisten 22 erfolgt dann in den jeweiligen Zwischenräumen zwischen den Leisten 22 das einzelne Nachfüllen der Speicherstäbe 3 in die Schächte 2. Dieses Nachfüllen erfolgt vorzugsweise in Abhängigkeit und/oder in Übereinstimmung mit der Freigabe der jeweils untersten Speicherstäbe in die Fördereinrichtung 6.

Die jeweilige Ausgangsposition, in welcher die Fördereinrichtung 6 mit den freigegebenen Speicherstäben 8 aus den Schächten 2 zu bestücken ist, und die Endposition, bei welcher die freigegebenen Speicherstäbe 8 den Bereich unterhalb des Magazins 1 verlassen, können mit Hilfe einer oder mehrerer Abtasteinrichtungen 24 (Fig. 1) oder 25, 26 (Fig. 3) festgestellt werden. Diese Abtasteinrichtungen können als Endschalter oder als berührungslos wirkende Abtasteinrichtungen welche optisch, kapazitiv oder sonstwie die Anfangs- und Endpositionen erfassen, ausgebildet sein.

Bei dem in Fig. 1 dargestellten Ausführungsbeispiel ist die Abtasteinrichtung 24 bevorzugt optisch ausgebildet. Ein vor ihr aus gesendeter Licht-, beispielsweise Laserstrahl wird von einer an der Fördereinrichtung vorgesehenen reflektierenden Fläche 27 reflektiert und von der Abtasteinrichtung 24 erfasst. Hierdurch wird mit Hilfe einer nicht näher dargestellten rechnergestützten Auswerteeinrichtung welche mit der Abtasteinrichtung 24 verbunden ist, festgestellt dass die Fördereinrichtung 6 sich mit ihren Aufnahmestellen 9 in ausgerichteter Position unterhalb der Schächte 2 des Magazins 1 sich befindet. In Folge dessen wird durch die schon erläuterte Auswerteeinrichtung die Steuereinrichtung 17 dahingehend betätigt, dass die untersten Speicherstäbe 7 für die Übergabe in die Fördereinrichtung 6 freigegeben werden. Mit Hilfe der Abtasteinrichtung 24 kann dieser Beladezustand der Fördereinrichtung 6 festgestellt werden und es erfolgt der gleichzeitige Transport der freigegebenen Speicherstäbe 8 in Richtung (in der Fig. 1 nach rechts) zur Bestückungsstation hin.

Beim Ausführungsbeispiel der Fig. 3 kann die Abtasteinrichtung 25 die Anfangsposition der Schubeinrichtung 16, welche Bestandteil der Fördereinrichtung 6 in diesem Ausführungsbeispiel ist, feststellen. Die Endposition der Schubeinrichtung 16 (äußerste rechte Position), bei welcher alle freigegebenen Speicherstäbe aus dem Bereich unterhalb des Magazins 1 entfernt sind, wird mit Hilfe der Abtasteinrichtung 26 festgestellt. Sobald die Schubeinrichtung 16 in ihre Ausgangsposition wieder zurückgekehrt ist wird dies ebenfalls von der Abtasteinrichtung 25 festgestellt. Durch die rechnergestützte Auswerteeinrichtung welche mit den Abtasteinrichtungen 25 und 26 verbunden ist wird dies als der Zustand ausgewertet, bei dem die Fördereinrichtung für die Aufnahme neuer freizugebender Speicherstäbe in Bereitschaft ist.

### Bezugszeichenliste

- 1: Magazin
- 2: Schächte
- 3: Speicherstäbe
- 4: obere Halteeinrichtung
- 5: untere Halteeinrichtung
- 6: Fördereinrichtung
- 7: unterster Speicherstab
- 8: freigegebener Speicherstab
- 9: Aufnahmestellen
- 10-15: Halteelemente (Bolzen)
- 16: Schubeinrichtung
- 17: Steuereinrichtung
- 18: Hubeinrichtung
- 19: Hubbewegung
- 20: Schüttgutfläche
- 21: Stirnseiten
- 22: Leisten
- 23: Vorsprünge
- 24: Abtasteinrichtung
- 25, 26: Abtasteinrichtungen

## Patentansprüche

1. Magazin für Speicherstäbe zur Aufnahme von wurstförmigen Produkten mit mehreren vertikal sich erstreckenden Schächten, in denen die Speicherstäbe übereinanderliegend anzuordnen sind, und einer Vereinzelungseinrichtung am jeweils unteren Ende eines Schachtes zur Freigabe des jeweils untersten Speicherstabes, wobei für ein ungehindertes Nachrücken der darüberliegenden Speicherstäbe die Breite des jeweiligen Schachtes an die Stabbreite angepasst ist, wobei
die Vereinzelungseinrichtung zumindest an einer der beiden Schachtstirnseiten (2) übereinanderliegende und für aufeinanderfolgende Betriebsstellungen in das Schachtinnere verschiebbare Halteeinrichtungen (4, 5) aufweist, wobei in einer ersten Betriebsstellung die beiden Halteeinrichtungen (4, 5) in das Schachtinnere ragen und der unterste Speicherstab (7) auf der oberen Halteeinrichtung (4) aufliegt, in einer zweiten Betriebsstellung die obere Halteeinrichtung (4) aus dem Schachtinneren entfernt ist und der unterste Speicherstab (7) auf der unteren Halteeinrichtung (5) aufliegt, in einer dritten Betriebsstellung sowohl die obere Halteeinrichtung (4) als auch die untere Halteeinrichtung (5) in das Schachtinnere ragen und in einer vierten Betriebsstellung die untere Halteeinrichtung (5) zur Freigabe des untersten Speicherstabes aus dem Schachtinneren entfernt ist, und wobei
das Magazin eine Hubeinrichtung (18) beinhaltet, mit der die Schächte (2) zumindest in der vierten Betriebsstellung aus einer angehobenen Normalposition in eine abgesenkte Position bewegt werden,
**dadurch gekennzeichnet, dass** das Magazin zur seitlichen Begrenzung der Schächte (2) und zur Anordnung der übereinander liegenden Speicherstäbe (3) in den vertikalen Stabanordnungen an den beiden innen liegenden Magazinstirnseiten in das Magazininnere ragende, sich in vertikaler Richtung im Abstand voneinander erstreckende und die Breite der Schächte (2) definierende Vorsprünge (23) aufweist, und dass an den oberen Enden der Schächte (2) die oberen Schachtöffnungen seitlich begrenzende und sich zwischen den Vorsprüngen (23) der beiden Magazinstirnseiten erstreckende Leisten (22) angeordnet sind.

2. Magazin nach Anspruch 1,
**dadurch gekennzeichnet, dass** in der dritten Betriebsstellung die obere Halteeinrichtung (4) in wenigstens einen zwischen dem untersten Speicherstab (7) und dem darüberliegenden Speicherstab (3) gebildeten Hohlraum ragt.

3. Magazin nach Anspruch 1,
**dadurch gekennzeichnet, dass** die Schächte (2) sowohl in der dritten als auch in der vierten Betriebsstellung in der abgesenkten Position angeordnet sind.

4. Magazin nach einem der Ansprüche 1 bis 3,
**dadurch gekennzeichnet, dass** unter den Schächten (2) eine Fördereinrichtung (6) vorgesehen ist, auf welcher die aus dem jeweiligen Schacht einzeln freigegebenen Speicherstäbe (8) in Aufeinanderfolge anzuordnen sind.

5. Magazin nach Anspruch 4,
**dadurch gekennzeichnet, dass** die Fördereinrichtung (6) Aufnahmestellen (9) aufweist, in denen jeweils ein aus dem zugeordneten Schacht (2) freigegebener Speicherstab anzuordnen ist.

6. Magazin nach einem der Ansprüche 1 bis 5,
**dadurch gekennzeichnet, dass** die obere Halteeinrichtung (4) und die untere Halteeinrichtung (5) jeweils zumindest ein in das Schachtinnere bewegbares längliches Halteelement (10 - 15), insbesondere in Bolzenform aufweist.

7. Magazin nach Anspruch 6,
**dadurch gekennzeichnet, dass** das jeweils eine Halteelement (10, 11) der oberen und unteren Halteeinrichtung (4, 5) mittig in der Schachtstirnseite angeordnet ist.

8. Magazin nach Anspruch 6 oder 7,
**dadurch gekennzeichnet, dass** die obere Halteeinrichtung (4) und die untere Halteeinrichtung (5) jeweils zwei Halteelemente (12 - 15) aufweist.

9. Magazin nach einem der Ansprüche 1 bis 8,
**dadurch gekennzeichnet, dass** die Betriebsstellungen der Halteeinrichtungen (4, 5) in den mehreren Schächten (2) gleichzeitig erfolgen.

10. Magazin nach einem der Ansprüche 1 bis 9,
**dadurch gekennzeichnet, dass** für die Zuführung der Speicherstäbe (3) zu den Schächten (2) an den oben offenen Enden der Schächte (2) eine Schüttgutfläche (20) vorgesehen ist.

11. Magazin nach einem der Ansprüche 1 bis 10,
**dadurch gekennzeichnet, dass** eine mittels einer rechnergestützten Auswerteeinrichtung betätigte Steuereinrichtung (17) ausgebildet ist zur gleichzeitigen Betätigung der oberen und unteren Halteeinrichtungen (4; 5) in den jeweiligen Schächten (2).

12. Magazin nach einem der Ansprüche 5 bis 11,
**dadurch gekennzeichnet, dass** die Fördereinrichtung (6) ausgebildet ist zum gleichzeitigen Transport der aus den mehreren Schächten (2) freigegebenen Speicherstäbe (3).

13. Magazin nach einem der Ansprüche 5 bis 12,
**dadurch gekennzeichnet, dass** eine Abtasteinrichtung (24; 25; 26) vorgesehen ist, welche die Bereitstellung von leeren Aufnahmestellen (9) der Fördereinrichtung (6) unter den Schächten (2) erfasst.

14. Magazin nach einem der Ansprüche 5 bis 13,
**dadurch gekennzeichnet, dass** zwei Abtasteinrichtungen (25; 26) vorgesehen sind, welche beim Transport der freigegebenen Speicherstäbe (8) eine Ausgangsposition und eine Endposition der insbesondere als Schubeinrichtung (16) ausgebildeten Fördereinrichtung (6) erfasst.

15. Verfahren zum Zuführen von Speicherstäben zur Bestückung mit wurstförmigen Produkten, bei dem die Speicherstäbe aus einer Bereitstellungsposition zur Bestückung mit den wurstförmigen Produkten transportiert werden, wobei
die Speicherstäbe in mehreren in Förderrichtung nebeneinander liegenden vertikalen Stabanordnungen in Schächten (2) einzeln übereinander angeordnet werden, dass die in den Stabanordnungen jeweils untersten Speicherstäbe durch Halteeinrichtungen (4, 5), die von den Stirnseiten der Schächte (2) in die Schächte (2) eingeführt bzw. aus diesen entfernt werden, einzeln im Wesentlichen gleichzeitig aus den Stabanordnungen freigegeben werden, und dass die freigegebenen nebeneinander angeordneten Speicherstäbe chargenweise gleichzeitig mittels der Fördereinrichtung zur Bestückung weitertransportiert werden, und wobei die Schächte (2) zumindest in einer vierten Betriebsstellung, in der die untere Halteeinrichtung (5) zur Freigabe des untersten Speicherstabes aus dem Schachtinneren entfernt ist, mit Hilfe einer Hubeinrichtung (18) aus einer angehobenen Normalposition in eine abgesenkte Position bewegt werden,
**dadurch gekennzeichnet, dass** das Magazin zur seitlichen Begrenzung der Schächte (2) und zur Anordnung der übereinander liegenden Speicherstäbe (3) in den vertikalen Stabanordnungen an den beiden innen liegenden Magazinstirnseiten in das Magazininnere ragende, sich in vertikaler Richtung im Abstand voneinander erstreckende und die Breite der Schächte (2) definierende Vorsprünge (23) aufweist, und dass die Speicherstäbe (7) über die oberen Schachtöffnungen, die durch seitlich begrenzende und sich zwischen den Vorsprüngen (23) der beiden Magazinstirnseiten erstreckende Leisten (22) gebildet sind, den Schächten (2) zugeführt werden.

16. Verfahren nach Anspruch 15,
**dadurch gekennzeichnet, dass** die Ausgangsposition der leeren Fördereinrichtung unter den vertikalen Stabanordnungen erfasst wird und dann die untersten Speicherstäbe in die Fördereinrichtung freigegeben werden.

17. Verfahren nach Anspruch 15 oder 16,
**dadurch gekennzeichnet, dass** die Ausgangsposition der leeren Fördereinrichtung berührungslos insbesondere optisch abgetastet wird.

18. Verfahren nach einem der Ansprüche 15 bis 17,
**dadurch gekennzeichnet, dass** die freigegebenen Speicherstäbe mit seitlichen Abständen voneinander oder aneinander liegend zur Bestückung transportiert werden.

19. Verfahren nach einem der Ansprüche 15 bis 18,
**dadurch gekennzeichnet, dass** das Verlassen der transportierten Charge der Speicherstäbe aus dem Bereich unter den vertikalen Stabanordnungen erfasst wird.

20. Verfahren nach Anspruch 19,
**dadurch gekennzeichnet, dass** die nachfolgende Anordnung der Fördereinrichtung in der Ausgangsposition unter den vertikalen Stabanordnungen für die nachfolgende Freigabe der untersten Speicherstäbe erfasst wird.

## Claims

1. A magazine for storage rods for receiving sausage-shaped products, comprising a plurality of vertically extending shafts in which the storage rods are to be arranged one above the other, and a separation means at the bottom end of each respective shaft for releasing the bottommost storage rod, wherein the width of the respective shaft is adapted to the rod width to ensure unimpeded successive movement of the storage rods located thereabove, wherein the separation means are provided at least at one of the two end faces of the shaft (2) with retention devices (4, 5) which are arranged one above the other and can be moved into the interior of the shaft for successive operating positions, wherein in a first operating position the two retention devices (4, 5) project into the interior of the shaft and the bottommost storage rod (7) rests on the upper retention device (4), in a second operating position the upper retention device (4) is removed from the interior of the shaft and the bottommost storage rod (7) rests on the lower retention device (5), in a third operating position both the upper retention device (4) and the lower retention device (5) project into the interior of the shaft, and in a fourth operating position the lower retention device (5) is removed from the interior of the shaft to release the bottommost storage rod, and wherein the magazine includes a lifting mechanism (18) with which the shafts (2) are moved at least in the fourth operating position from a raised normal position into a lowered position,
**characterised in that** the magazine has protrusions (23) which extend in the vertical direction at a distance from each other and define the width of the respective shafts (2) and which project into the interior of the magazine at the two inner end faces of the magazine to laterally demarcate the shafts and to arrange the storage rods (3), lying one above the other, in the vertical rod arrangements, and that bars (22) which laterally define the upper shaft openings and which extend between the protrusions (23) from the two end faces of the magazine are arranged at the upper ends of the shafts (2).

2. The magazine according to claim 1,
**characterised in that** in the third operating position the upper retention device (4) projects into at least one cavity which is formed between the bottommost storage rod (7) and the storage rod (3) located thereabove.

3. The magazine according to claim 1,
**characterised in that** the shafts (2) are arranged in the lowered position in both the third and fourth operating positions.

4. The magazine according to any one of claims 1 to 3,
**characterised in that** a conveying means (6) on which the storage rods (8) released from the respective shaft are arranged in consecutive order is provided under the shafts (2).

5. The magazine according to claim 4,
**characterised in that** the conveying means (6) has loading points (9) in each of which one storage rod released from the associated shaft (2) is to be placed.

6. The magazine according to any one of claims 1 to 5,
**characterised in that** the upper retention device (4) and the lower retention device (5) each comprises at least one elongate retention element (10 - 15), particularly in the form of a bolt, which can be moved into the interior of the shaft.

7. The magazine according to claim 6,
**characterised in that** the respective retention element (10, 11) of the upper and lower retention device (4, 5) is centrally disposed in the end face of the shaft.

8. The magazine according to claim 6 or 7,
**characterised in that** the upper retention device (4) and the lower retention device (5) each comprise two retention elements (12 -15).

9. The magazine according to any one of claims 1 to 8,
**characterised in that** the operating positions of the retention devices (4, 5) occur simultaneously in the plurality of shafts (2).

10. The magazine according to any one of claims 1 to 9,
**characterised in that** at the open top ends of the shafts (2) a bulk material area (20) is provided for feeding the storage rods (3) to the shafts (2).

11. The magazine according to any one of claims 1 to 10,
**characterised in that** a control device (17) actuated by a computer-aided evaluation device is configured for simultaneous actuation of the upper and lower retention devices (4; 5) in the respective shafts (2).

12. The magazine according to any one of claims 5 to 11,
**characterised in that** the conveying means (6) is configured for simultaneous transportation of the storage rods (3) released from the plurality of shafts (2).

13. The magazine according to any one of claims 5 to 12,
**characterised in that** a scanning device (24; 25; 26) is provided which detects the availability of empty loading points (9) on the conveying means (6) under the shafts (2).

14. The magazine according to any one of claims 5 to 13,
**characterised in that** two scanning devices (25; 26) are provided which detect a starting position and an end position of the conveying means (6) during transportation of the released storage rods (8), said conveying means being configured as a pushing device (16), in particular.

15. A method for supplying storage rods that are to be loaded with sausage-shaped products, in which the storage rods are transported from a standby position to be loaded with sausage-shaped products, wherein
the storage rods are individually arranged one above the other in shafts (2), in a plurality of vertical rod arrangements adjacent to one another in the direction of transportation, wherein the lowermost storage rods in each rod arrangement are individually released substantially simultaneously from the rod arrangements by retention devices (4, 5) which are inserted from the end face of the shafts (2) into the shafts (2), or removed therefrom, and that the released, adjacently arranged storage rods are forwarded simultaneously in batches by means of the conveying means for subsequent loading, and wherein the shafts (2) are moved with the aid of a lifting mechanism (18) from a raised normal position into a lowered position, at least in a fourth operating position in which the lower retention device (5) is removed from the interior of the shaft to release the bottommost storage rod,
**characterised in that** the magazine has protrusions (23) which extend in the vertical direction at a distance from each other and define the width of the respective shafts (2) and which project into the interior of the magazine at the two inner end faces of the magazine to laterally demarcate the shafts and to arrange the storage rods (3), lying one above the other, in the vertical rod arrangements, and that the storage rods (7) are supplied to the shafts (2) via the upper shaft openings, which are formed by bars (22) which extend between the protrusions (23) from the two end faces of the magazine and laterally define the upper shaft openings.

16. The method according to claim 15,
**characterised in that** the starting position of the empty conveying means under the vertical rod arrangements is detected, and bottommost storage rods are released into the conveying means.

17. The method according to claim 15 or 16,
**characterised in that** the starting position of the empty conveying means is scanned contactlessly, in particular optically.

18. The method according to any one of claims 15 to 17,
**characterised in that** the released storage rods are transported with lateral gaps therebetween or lying adjacent to one another for subsequent loading.

19. The method according to any one of claims 15 to 18,
**characterised in that** it is detected when the batch of storage rods being transported has exited the region under the vertical rod arrangements.

20. The method according to claim 19,
**characterised in that** the next positioning of the conveying means in the starting position under the vertical rod arrangements is detected for subsequent release of the bottommost storage rods.

## Revendications

1. Magasin à tiges de stockage pour la réception de produits en forme de saucisse, ayant plusieurs puits, qui s'étendent verticalement et dans lesquels les tiges de stockage peuvent être rangées en étant les unes au-dessus des autres, et un dispositif d'individualisation à l'extrémité inférieure respective d'un puits pour la libération de la tige de stockage respectivement la plus basse, dans lequel, pour une poussée sans obstacle des tiges de stockage se trouvant au-dessus, la largeur du puits est adaptée à la largeur d'une tige, dans lequel
le dispositif d'individualisation a au moins des dispositifs (4, 5) de maintien qui sont superposés sur l'un des deux côtés (2) frontaux du puits et qui peuvent coulisser à l'intérieur du puits pour des positions de fonctionnement se succédant, dans lequel, dans une première position de fonctionnement, les deux dispositifs (4, 5) de maintien pénètrent à l'intérieur du puits et la tige de stockage la plus basse repose sur le dispositif (4) de maintien supérieur, dans une deuxième position de fonctionnement, le dispositif (4) de maintien supérieur est éloigné de l'intérieur du puits et la barre (7) de stockage la plus basse s'applique au dispositif (5) de maintien inférieur, dans une troisième position de fonctionnement, à la fois le dispositif (4) de maintien supérieur et le dispositif (5) de maintien inférieur pénètrent à l'intérieur du puits et, dans une quatrième position de fonctionnement, le dispositif (5) de maintien inférieur est, pour libérer la barre de stockage la plus basse, éloigné de l'intérieur du puits, et dans lequel
le magasin comporte un dispositif (18) de levage, par lequel les puits (2) sont déplacés au moins dans la quatrième position de fonctionnement, d'une position normale soulevée en une position abaissée,
**caractérisé en ce que** le magasin a, sur les deux côtés frontaux du magasin se trouvant vers l'intérieur, pour une délimitation latérale des puits (2) et pour ranger les produits (3) en forme de saucisse disposés les uns au-dessus des autres dans les rangées verticales de produits, des saillies (23) faisant saillie à l'intérieur du magasin, qui s'étendent à distance les unes des autres dans la direction verticale et définissent la largeur des puits (2), et **en ce que**, sur les extrémités supérieures des puits (2), sont disposées des réglettes (22) délimitant latéralement les ouvertures supérieures des puits et s'étendant entre les deux côtés frontaux du magasin.

2. Magasin suivant la revendication 1,
**caractérisé en ce que**, dans la troisième position de fonctionnement, le dispositif (4) de maintien supérieur pénètre dans au moins un espace vide formé entre la tige (7) de stockage la plus basse et la tige (3) de stockage se trouvant au-dessus.

3. Magasin suivant la revendication 1,
**caractérisé en ce que** les puits (2) sont disposés, tant dans la troisième qu'également dans la quatrième position de fonctionnement, dans la position abaissée.

4. Magasin suivant l'une des revendications 1 à 3,
**caractérisé en ce qu'**il est prévu, sous les puits (2), un dispositif (6) convoyeur, sur lequel sont disposées en se succédant les tiges (8) de stockage libérées individuellement du puits respectif.

5. Magasin suivant la revendication 4,
**caractérisé en ce que** le dispositif (6) convoyeur a des points (9) de réception, dans lesquels une tige de stockage libérée du puits (2) associé peut être mise.

6. Magasin suivant l'une des revendications 1 à 5,
**caractérisé en ce que** le dispositif (4) de maintien supérieur et le dispositif (5) de maintien supérieur ont respectivement au moins un élément (10 à 15) de maintien oblong mobile à l'intérieur du puits, notamment sous la forme d'un axe.

7. Magasin suivant la revendication 6,
**caractérisé en ce qu'**un élément (10, 11) de maintien des dispositifs (4, 5) de maintien supérieur et inférieur est disposé au milieu dans le côté frontal du puits.

8. Magasin suivant la revendication 6 ou 7,
**caractérisé en ce que** le dispositif (4) de maintien supérieur et le dispositif (5) de maintien inférieur ont respectivement deux éléments (12 à 15) de maintien.

9. Magasin suivant l'une des revendications 1 à 8,
**caractérisé en ce que** les mises en fonctionnement des dispositifs (4, 5) de maintien s'effectuent simultanément dans les plusieurs puits (2).

10. Magasin suivant l'une des revendications 1 à 9,
**caractérisé en ce que**, pour l'amenée des tiges (3) de stockage au puits (2), il est prévu une surface (20) de produits en vrac aux extrémités ouvertes vers le haut des puits (2).

11. Magasin suivant l'une des revendications 1 à 10,
**caractérisé en ce qu'**un dispositif (17) de commande actionné au moyen d'un dispositif d'exploitation assisté par ordinateur est constitué pour l'actionnement simultané des dispositifs (4, 5) de maintien supérieur et inférieur dans les puits (2) respectifs.

12. Magasin suivant l'une des revendications 5 à 11,
**caractérisé en ce que** le dispositif (6) convoyeur est constitué pour le transport simultané des tiges (3) de stockage libérées des plusieurs puits (2).

13. Magasin suivant l'une des revendications 5 à 12,
**caractérisé en ce qu'**il est prévu un dispositif (24, 25, 26) de détection, qui détecte la disponibilité d'emplacements (9) de réception vides du dispositif (6) convoyeur sous les puits (2).

14. Magasin suivant l'une des revendications 5 à 13,
**caractérisé en ce qu'**il est prévu deux dispositifs (25, 26) de détection, qui, lors du transport des tiges (8) de stockage libérées, détectent une position de départ et une position finale du dispositif (6) convoyeur constitué notamment sous la forme d'un dispositif (16) de poussée.

15. Procédé d'amenée de tiges de stockage pour les garnir de produits sous forme de saucisse, dans lequel on transporte les tiges de stockage d'une position de préparation au garnissage en les produits sous forme de saucisse, dans lequel on dispose les tiges de stockage d'une manière superposée individuellement dans des puits (2) en plusieurs agencements de tiges verticales se trouvant les unes à côté des autres dans la direction de convoyage, en ce que l'on libère, individuellement essentiellement en même temps, des agencements de tiges, les tiges de stockage respectivement les plus basses dans les agencements de tiges par des dispositifs (4, 5) de maintien, qui sont introduits par les côtés frontaux des puits (2) dans les puits (2) et qui en sont retirés, et en ce que l'on continue à transporter, charge par charge en même temps au moyen du dispositif convoyeur vers le garnissage, les tiges de stockage disposées les unes à côté des autres et libérées et dans lequel on fait passer d'une position normale soulevée à une position abaissée les puits (2), au moins dans une quatrième position de fonctionnement, dans laquelle le dispositif (5) de maintien inférieur est retiré, à l'aide d'un dispositif (18) de levage, de l'intérieur du puits pour la libération de la tige de stockage la plus basse,
**caractérisé en ce que** le magasin a, pour une délimitation latérale des puits (2) et le rangement de produits (3) en forme de saucisse disposés les uns au-dessus des autres dans les rangées verticales de produits, sur les deux côtés frontaux du magasin se trouvant à l'intérieur, des saillies (23) faisant saillie à l'intérieur du magasin, qui s'étendent à distance les unes des autres dans la direction verticale et définissent la largeur des puits (2), et **en ce que** l'on amène les tiges (7) de stockage aux puits (2) par les ouvertures supérieures des puits, qui sont formées par des réglettes (22) de délimitation latérale et s'étendant entre les saillies (23) des deux côtés frontaux du magasin.

16. Procédé suivant la revendication 15,
**caractérisé en ce que** l'on détecte la position de départ du dispositif convoyeur vide sous les agencements de tiges verticaux et **en ce que** l'on libère ensuite les tiges de stockage les plus basses dans le dispositif convoyeur.

17. Procédé suivant la revendication 15 ou 16,
**caractérisé en ce que** l'on détecte la position de départ du dispositif convoyeur vide sans contact, notamment visuellement.

18. Procédé suivant l'une des revendications 15 à 17,
**caractérisé en ce que** l'on transporte au garnissage les tiges de stockage libérées se trouvant à des distances latérales l'une de l'autre ou à côté l'une de l'autre.

19. Procédé suivant l'une des revendications 15 à 18,
**caractérisé en ce que** l'on détecte que les charges transportées des tiges de stockage ont quitté la zone en dessous des agencements verticaux de tiges.

20. Procédé suivant la revendication 19,
**caractérisé en ce que** l'on détecte l'agencement suivant du dispositif convoyeur dans la position de départ sous les agencements verticaux de tiges pour la libération suivante des tiges de stockage les plus basses.
